Europäisches Patentamt

European Patent Office

Office européen des brevets

(19)

(11) Veröffentlichungsnummer: **0 259 713 B1**

(12)
# EUROPÄISCHE PATENTSCHRIFT

(45) Veröffentlichungstag der Patentschrift: **18.03.92**

(21) Anmeldenummer: **87112501.9**

(22) Anmeldetag: **27.08.87**

(51) Int. Cl.⁵: **A23K 1/18**, A23K 1/08,
A23K 1/16, A23C 11/04

(54) **Synthetisches Milchaustauschfuttermittel, insbesondere Hundemilch.**

(30) Priorität: **01.09.86 DE 3629710**

(43) Veröffentlichungstag der Anmeldung:
**16.03.88 Patentblatt 88/11**

(45) Bekanntmachung des Hinweises auf die
Patenterteilung:
**18.03.92 Patentblatt 92/12**

(84) Benannte Vertragsstaaten:
**AT BE CH DE FR GB IT LI NL**

(56) Entgegenhaltungen:
EP-A- 0 185 142          EP-A- 0 241 097
DE-A- 2 655 380          DE-A- 2 831 951
DE-A- 3 039 352          DE-A- 3 327 963
DE-A- 3 512 705          DE-B- 1 219 318
FR-A- 1 551 098

**Lebensmittellexikon S. 561 VEB**

(73) Patentinhaber: **Meyer, Dorothee, Dr.
Hauptstrasse 8
W-8896 Rapperzell(DE)**

(72) Erfinder: **Meyer, Dorothee, Dr.
Hauptstrasse 8
W-8896 Rapperzell(DE)**

(74) Vertreter: **Bockhorni, Josef, Dipl.-Ing. et al
Herrmann-Trentepohl, Kirschner, Grosse,
Bockhorni & Partner Forstenrieder Allee 59
W-8000 München 71(DE)**

**Beschreibung**

Die Erfindung betrifft ein synthetisches Milchaustauschfuttermittel, insbesondere Hundemilch gemäß dem Oberbegriff des Patentanspruchs 1.

Synthetische Milchaustauschfuttermittel, insbesondere Hundemilchen,sind bekannt und basieren maßgeblich auf Trockenmilch- oder Molkenpulver, Milchproteinen, Fetten und Halbfabrikaten in Form von Vitaminen, Mineralstoffen, Spurenelementen und dergleichen.

Die bekannten Hundemilchen zeichnen sich sämtlich durch einen überaus hohen Milchpulver- bzw. Molkenpulveranteil aus und zwar in Höhe von insgesamt über 60 % bis maximal 85 %. Derartige Hundemilchen, die in der Regel umgeänderte Kälbermilchen sind, zeigen erhebliche Nachteile, wenn sie zur ausschließlichen Ernährung von Welpen verwendet werden. Es hat sich nämlich gezeigt, daß bei einer Fütterung von Welpen mit derartigen Hundemilchen teilweise lebensgefährlicher Durchfall auftritt und im übrigen den Welpen ein zu geringes Energieangebot durch diese Milchen vermittelt wird.

Aus diesem Grund ist es erforderlich, daß die bekannten Hundemilchen bei einer mutterlosen Aufzucht über Tag und Nacht mehrmalig und zwar etwa alle zwei Stunden verfüttert werden, was aber kaum praktikabel ist.

DE-B-1 219 318 beschreibt ein Milchaustauschfilter mittel für Hunde aus Kuhmilch und Zusatzstoffen, das an die Zusammensetzung natürlicher Hundemilch angeglichen ist.

Aufgabe der Erfindung ist es, ein synthetisches Milchaustauschfuttermittel auf Basis von Kuhmilch zur Aufzucht von fleischfressenden Tieren, insbesondere eine Hundemilch, zu schaffen, welche sich zur ausschließlichen Ernährung von Jungtieren und damit praktisch zur mutterlosen Aufzucht eignet.

Diese Aufgabe wird erfindungsgemäß durch die im kennzeichnenden Teil des Patentanspruches 1 enthaltenen Merkmale gelöst.

Nach Maßgabe der Erfindung wird nach einer ersten Alternative der Anteil an Trockenmilchpulver des Futtermittels wesentlich verringert und zwar auf einen Anteil unter 60 Gew.-% und insbesondere unter 45 Gew.-%. Ein hierdurch auftretendes Defizit wird durch andere Milchproteine ausgeglichen die zusätzlich beigegeben werden, und zwar durch Milchproteine mit geringem Lactose- und extrem hohem Rohproteingehalt. Diese Maßnahme berücksichtigt den Umstand, daß der Nachteil der bislang bekannten Hundemilchen maßgeblich auf dem hohen Lactosegehalt beruht, der letztendlich durch den hohen Anteil an Magermilch- bzw. Molkenpulver am synthetischen Milchaustauschfuttermittel bedingt ist. Nach einer weiteren Alternative wird auf den Einsatz von Milchpulver völlig verzichtet und wird insbesondere vollentzuckertes Milch- und/oder Molkenproteinpulver als Basis des Futtermittels verwendet. Diese Proteinkonzentrate in Pulverform können durch Ultrafiltration und dergleichen Verfahren hergestellt werden. Damit läßt sich der Lactosegehalt des Futtermittels, also der Hundemilch in erheblicher Weise minimieren. Als weitere Alternative kommt ein verringerter Einsatz von Milchpulver in Kombination mit vollentzuckertem Milch- und/oder Molkenproteinpulver in Betracht.

Nach Maßgabe der Erfindung läßt sich der Lactoseanteil des Produkts auf unter 30 % reduzieren und zwar vorzugsweise auf 1 bis 25 %. Gleichzeitig läßt sich der Rohproteingehalt auf über 30 % und zwar vorzugsweise 31 bis 40 % anheben. Durch die vorgenommene Absenkung des Magermilchpulveranteiles wird die Magermilch im wesentlichen auf die Funktion als Träger von Fett konzentriert und genutzt, wohingegen die Steuerung des Lactoseanteiles durch die entsprechende Beigabe an Milchproteinen erfolgt.

Als Milchproteine werden zweckmäßigerweise durch Ultrafiltration gewonnene Molkenproteine verwendet, insbesondere lösliche nicht denaturierte Proteine bestehend aus den Fraktionen
Beta-Lactoglobulin
Alpha-Lactalbumin
Serumalbumin
Immunoglobulinen
Protease-Pepton-Fraktion.

Bei der Ultrafiltration wird die Molke turbulent über die Oberfläche von Membranen geführt. Unter Einwirkung eines hydrostatischen Druckes permeieren Wasser, Lactose und Salze sowie nieder-molekulare Stoffe, während die hochmolekularen Stoffe, wie die Molkenproteine, zurückgehalten werden. Es wird damit also im wesentlichen die Lactose herausgenommen, so daß aufgeschlossene Eiweißfraktionen, gewonnen aus Milcheiweiß, für den verringerten Anteil an Magermilchpulver zugegeben werden. Verwendet werden hierbei Molkenproteine mit 1 bis 10 % Lactose, vorzugsweise Molkenproteine mit bis zu 1 % Lactose

Ferner werden Milchproteine in Form von Caseinen zugegeben, insbesondere Natrium-, Kalium-, Calcium-Caseine oder Säure-Caseine. Diese werden zweckmäßigerweise durch Fällung aus Magermilch mit Säuren, Waschung, mechanischer Abtrennung und Spezialtrocknung gewonnen. Verwendbar ist auch Labcasein, gewonnen durch enzymatische Fällung aus Magermilch, Waschung, mechanischer Abtrennung und Spezialtrocknung.

Der Vorteil der erfindungsgemäßen Maßnahmen ist darin zu sehen, daß durch Verwendung dieser Milchproteine die angestrebte Reduktion des Lactoseanteiles des synthetischen Futtermittels bei gleichzeitiger Verwendung von ausschließlich Milchproteinen erreicht wird.

Erfindungsgemäß wird das Albumin-Globulin-Verhältnis zum Caseinanteil in Höhe von 2,1 bis 3,0 : 4,1 bis 5,0 exakt eingestellt.

Um mögliche naturbedingte Schwankungen der Rohproteinkomponente auszugleichen, ist es zweckmäßig, Zusätze von reinen Aminosäuren beizugeben. Hierfür eignen sich insbesondere Methionin, Lysin und Cystin, bevorzugt jeweils in Mengen bis 2 % der gesamten Rezeptur. Hierbei ist es besonders zweckmäßig, ein Anteilsverhältnis Lysin : Methionin von etwa 3,1 % : 1,65 % einzustellen.

Der Rohfettgehalt der synthetischen Milch liegt bevorzugt über 25 % und zwar insbesondere bevorzugt bei 25,5 bis 40 %.

Bevorzugt werden kurzkettige Fettsäuren und zwar ab C-12 und nur geringe Anteile von langkettigen Fettsäuren von C-20 und höher (unter 0,5 %) verwendet.

Eine besonders bevorzugte Fettsäureverteilung ergibt sich wie folgt:

C-12       0,1 - 0,5 Gewichtsteile
C-14       2,0 - 10,0 Gewichtsteile
C-16       20,0 - 41,0 Gewichtsteile
C-16/1     1,3 - 6,0 Gewichtsteile
C-18       2,4 - 29,0 Gewichtsteile
C-18/1     25,0 - 48,0 Gewichtsteile
C-18/2     2,5 - 15,0 Gewichtsteile
C-18/3     0,2 - 3,0 Gewichtsteile
C-20/0     und höher höchstens 1 Gewichtsteil (Summe insgesamt 100 Gewichtsteile).

Ferner ist es zweckmäßig, der Fettkomposition einen Emulgator sowie ein Antoxydans beizugeben. Hierbei können als Emulgatoren die üblichen Emulgatoren eingesetzt werden, beispielsweise Fettsäuremonoglyceride-diglyceride, Ester der Fettsäuremonoglyceride, Zuckerfettsäureester, natives oder modifiziertes Lecithin oder deren Mischungen. Als Antoxydantien können ebenfalls die üblichen verwendet werden, wie beispielsweise Ethoxyquin und/oder BHT.

Beispiele für den Fettbestandteil der synthetischen Futtermilch ergeben sich aus der folgenden Tabelle:

**Alle Angaben in %**

| Fettrezeptur | 1 | 2 | 3 | 4 | 5 | 6 | 7 | 8 |
|---|---|---|---|---|---|---|---|---|
| Rindertalg | 30 | 80 | – | 90 | 75 | 50 | – | – |
| Sojaöl | 10 | 18 | 5 | 8 | 20 | 20 | 10 | 18 |
| Schweineschmalz | – | – | 20 | – | 3 | 18 | – | – |
| Sonnenblumenöl | 5 | – | 10 | – | – | – | – | – |
| Knochenfett | 53 | – | 60 | – | – | – | 88 | 70 |
| Emulgator + Antoxydans | 2 | 2 | 5 | 2 | 2 | 2 | 2 | 2 |
| Summen | | | | | 100% | | | |

Bevorzugte Fettsäuren sind Myristinsäure, Palmitinsäure, Palmitolinsäure, Stearinsäure, Ölsäure, Linolsäure und Linolensäure.

Zur Verbesserung der Verträglichkeit der synthetischen Hundemilch werden auch Lactobacillen zugegeben und zwar bevorzugt Lactobacillus acidophilus bzw. Lactobacillus bifidus in einer Menge von $10^6$ Keimen pro 100 g Milch oder 0,05 - 1 % Trockenfutter an der Gesamtrezeptur.

Weitere Zusätze sind Pektine oder Tannine in einer Menge von 0,001 - 0,5 %.

Im folgenden werden Beispiele des erfindungsgemäßen Futtermittels beschrieben:

Beispiel 1

| 30 % | Magermilchpulver |
|---|---|
| 30 % | Fett |
| 20 % | Molkenprotein mit 1 % Lactoseanteil |
| 15 % | Caseine |
| 5 % | Halbfabrikate (bestehend aus Vitaminen, Mineralstoffen, Spurenelementen, Zusatz von Aminosäuren). |

Diese Rezeptur besitzt einen Lactoseanteil von 15,8 %, einen Rohproteinanteil von 39 % und einen Anteil an Rohfett von 30 %.

Beispiel 2

| 40 % | Magermilchpulver |
|---|---|
| 35 % | Fett |
| 10 % | Molkenprotein |
| 10 % | Caseine |
| 5 % | Halbfabrikate. |

Die Rezeptur hat einen Lactosegehalt von 21 %, einen Gehalt an Rohprotein von 30,5 %. Rohfettanteil 35,5 %.

Beispiel 3

| 41 % | Magermilchpulver |
|---|---|
| 27 % | Rohfett |
| 16 % | Molkenprotein |
| 11 % | Caseine |
| 5 % | Halbfabrikat. |

Diese bevorzugte Rezeptur besitzt einen Lactoseanteil von 21,2 %, einen Rohproteinanteil von 36,2 %.

Die biologische Wertigkeit der Komponente Rohprotein liegt bei den genannten Beispielen im Durchschnitt bei 92 und der PER-Wert bei 3,2.

Beispiel 4

| 31,0 % | Molkenproteinpulver |
|---|---|
| 33 % | Rohfett |
| 21,8 % | Casein |
| 7,0 % | Rohasche |
| 0,1 % | Rohfaser |
| 1,35 % | Methionin |
| 1,2 % | Calcium |
| 0,9 % | Phosphor |
| 3,0 % | Lysin |
| 13,2 % | Albumin |

sowie Vitamin A (I.E. 25 000), Vitamin E (mg) 200 und Vitamin D3 (I.E. 3 000) sowie Reste und Spurenelemente.

Diese Rezeptur besitzt einen Rohproteinanteil von 36,5 % und einen Lactoseanteil von unter 4 %. Der Nährwert beträgt ca. 7 200 Kcal bzw. 30 300 KJ.

Beispiel 5

| 30,0 % | Trockenmilchpulver |
|---|---|
| 31,3 % | Fett |
| 20,7 % | Casein |
| 7,4 % | Rohasche |
| 1,31 % | Methionin |
| 1,34 % | Calcium |
| 0,86 % | Phosphor |

4

3,02 %            Lysin

10,5 %            Albumin

und als Vitamine Vitamin A (I.E.) 25 000, Vitamin E (mg) 200 und Vitamin $D_3$ (I.E.) 3 000 sowie Reste und Spurenelemente.

Diese Rezeptur besitzt einen Rohproteinanteil von 33,3 % und einen Lactoseanteil von 17,3 %. Der Nährwert beträgt ca. 6 500 Kcal sowie 27 300 KJ.

Beispiel 6

30 %           vollentzuckertes Milchprotein

25 %           vollentzuckertes Molkenprotein

32,5 %          Fettmischung

2,5 %           Emulgator

10 %           Halbfabrikat.

Die Erfindungsgemäße Rezeptur zeichnet sich aus durch eine weitgehende Anpassung an die Muttermilch, so daß mit dem synthetischen Futtermittel eine weitgehend mutterlose Aufzucht gewährleistet ist sowie durch äußerst einfache Herstellung. Das Futtermittel zeichnet sich durch einen sehr hohen Nährwert aus nämlich etwa 30 000 KJ pro kg Trockenmasse, woraus sich ein voller kalorischer Ersatz der Muttermilch ergibt. Bei Welpen bedarf es nurmehr eines drei- bis viermaligen Fütterns am Tage ab dem ersten Lebenstag. Die exakte Einhaltung des Gehaltes an essentiellen Aminosäuren und Eiweißbestandteilen und eine weitestgehende Angleichung des Fettsäuremusters an die Muttermilch ist von weiterem maßgeblichen Anteil für den Einstaz der Milch zur mutterlosen Aufzucht von fleischfressenden Tieren, insbesondere Hunden oder Katzen.

Die hierin verwendeten Prozentangaben beziehen sich auf Gewichtsprozente.

**Patentansprüche**

1.     Synthetisches Milchaustauschfuttermittel auf Basis von Kuhmilch zur Aufzucht von fleischfressenden Tieren, insbesondere Hundemilch, mit Fett und Halbfabrikaten in Form von Vitaminen, Mineralstoffen, Spurenelementen und/oder Aminosäurezusätzen und dergleichen, das auf Magermilchbasis unter Verwendung von Milchpulver und/oder von vollentzuckertem Milchprotein- oder Molkenproteinpulver hergestellt ist, gekennzeichnet durch einen Milchpulveranteil von weniger als 45 Gew.-%, einen Lactoseanteil von weniger als 30 Gew.-% , einen Fettanteil von mehr als 25 Gew.-% und einen Proteinanteil von mehr als 30 Gew.-% mit einem Anteilsverhältnis von Albumin und Globulin zu Casein von 2,1 bis 3,0 zu 4,1 bis 5,0.

2.     Futtermittel nach Anspruch 1, dadurch gekennzeichnet, daß die Milch ausschließlich auf der Basis von entzuckertem Milchprotein- und/oder Molkenproteinpulver aufgebaut ist, von dem ein Anteil bis zu 60 %, vorzugsweise bis zu 55 % verwendet ist.

3.     Futtermittel nach Anspruch 1, gekennzeichnet durch einen Anteil an Magermilchpulver von 30 bis 41 Gew.-%.

4.     Futtermittel nach Anspruch 3, dadurch gekennzeichnet, daß neben Magermilchpulver Milchprotein mit einem Anteil von 15 bis 55 Gew.-%, vorzugsweise 20 bis 45 Gew.-%, vorhanden ist.

5.     Futtermittel nach einem der vorhergehenden Ansprüche, dadurch gekennzeichnet, daß die Milchproteine durch Ultrafiltration gewonnene Molkenproteine sowie Caseine sind.

6.     Futtermittel nach Anspruch 5, dadurch gekennzeichnet, daß der Anteil der beigegebenen Molkenproteine 10 bis 40 %, vorzugsweise 15 bis 25 % beträgt.

7.     Futtermittel nach Anspruch 6, dadurch gekennzeichnet, daß die Molkenproteine lösliche, nicht denaturierte Proteine sind, bestehend aus

Beta-Lactoglobulin

Alpha-Lactalbumin

Serumalbumin

Immunoglobulinen

Protease-Pepton-Fraktion.

**8.** Futtermittel nach Anspruch 5, dadurch gekennzeichnet, daß der Anteil an Caseinen 5 bis 30 Gew.-%, vorzugsweise 10 bis 15 Gew.-%, beträgt.

**9.** Futtermittel nach Anspruch 8, dadurch gekennzeichnet, daß als Caseine Natrium-, Kalium-, Calcium- oder Säurecaseine verwendet werden.

**10.** Futtermittel nach einem der vorhergehenden Ansprüche, dadurch gekennzeichnet, daß es reine Aminosäuren zum Ausgleich von Schwankungen der Rohproteinkomponente enthält.

**11.** Futtermittel nach Anspruch 10, dadurch gekennzeichnet, daß es als reine Aminosäuren Methionin, Lysin und Cystin in Mengen von jeweils bis 2 % enthält.

**12.** Futtermittel nach Anspruch 11, dadurch gekennzeichnet, daß das Anteilsverhältnis Lysin : Methionin, etwa 3,1 % : 1,65 %, bezogen auf die Trockenmasse, beträgt.

**13.** Futtermittel nach einem der vorhergehenden Ansprüche, dadurch gekennzeichnet, daß der Rohfettgehalt 25,5 bis 40 Gew-% beträgt.

**14.** Futtermittel nach einem der vorhergehenden Ansprüche, gekennzeichnet durch einen Zusatz von Bakterienstämmen, vorzugsweise Lactobacillen oder Streptokokkenarten.

**15.** Futtermittel nach einem der vorhergehenden Ansprüche, gekennzeichnet durch einen Zusatz von Pektinen oder Tannin in einer Menge von 0,001 bis 1,5 Gew.-%.

**Claims**

**1.** A synthetic feed milk substitute on a cow's milk basis for rearing carnivorous animals, especially dogs, containing fat and half-finished products in the form of vitamins, mineral substances, trace elements and/or amino acid additives and the like, said synthetic feed milk substitute being produced on a skim milk basis using milk powder and/or fully desweetened milk protein or whey protein powder,
**characterized by**
a milk powder content of less than 45 percent by weight, a lactose content of less than 30 percent by weight, a fat content of more than 25 percent by weight and a protein content of more than 30 percent by weight with a content ratio of albumin and globulin to casein of 2.1 to 3.0 : 4.1 to 5.0.

**2.** A feed according to claim 1,
**characterized in that**
the milk is composed exclusively on the basis of desweetened milk protein and/or whey protein powder, of which a content of up to 60%, preferably up to 55%, is used.

**3.** A feed according to claim 1,
**characterized by**
a skim milk powder content of 30 to 41 percent by weight.

**4.** A feed according to claim 3,
**characterized in that,**
apart from skim milk powder, milk protein with a content of 15 to 55 percent by weight, preferably 20 to 45 percent by weight, is contained.

**5.** A feed according to any of the preceding claims,
**characterized in that**
the milk proteins are whey proteins obtained by way of an ultrafiltration process as well as caseins.

**6.** A feed according to claim 5,
**characterized in that**
the content of the milk proteins added amounts to 10 to 40%, preferably 15 to 25%.

**7.** A feed according to claim 6,
**characterized in that**
the whey proteins are soluble, non-denatured proteins consisting of
beta lactoglobulin
alpha lactalbumin
serum albumin
immunoglobulins
protease-peptone-fraction.

**8.** A feed according to claim 5,
**characterized in that**
the casein content is 5 to 30 percent by weight, preferably 10 to 15 percent by weight.

**9.** A feed according to claim 8,
**characterized in that**
sodium, potassium, calcium or acid caseins are used as caseins.

**10.** A feed according to any of the preceding claims,
**characterized in that**
it contains pure amino acids for balancing variations in the crude protein component.

**11.** A feed according to claim 10,
**characterized in that**
it contains methionine, lysine and cystine as pure amino acids in amounts of up to 2% percent, respectively.

**12.** A feed according to claim 11,
**characterized in that**
the content ratio of lysine : methionine is about 3.1% : 1.65%, relative to the dry mass.

**13.** A feed according to any of the preceding claims,
**characterized in that**
the crude fat content is 25.5 to 40 percent by weight.

**14.** A feed according to any of the preceding claims,
**characterized** by
an addition of bacterial strains, preferably lactobacilli or streptococcus species.

**15.** A feed according to any of the preceding claims,
**characterized by**
an addition of pectins or tannin in an amount of 0.001 to 1.5 percent by weight.

**Revendications**

**1.** Aliment lacté synthétique de substitution à base de lait de vache pour l'élevage d'animaux carnivores, plus particulièrement lait pour chiens, avec corps gras et semiproduits sous la forme de vitamines, de matières minérales, d'oligo-éléments et/ou d'amino-acides ajoutés etc., qui est à base de lait maigre et est préparé avec de la poudre de lait et/ou de la poudre totalement dessucrée de protéines de lait ou de protéines de petit-lait, aliment caractérisé en ce qu'il a une teneur en poudre de lait inférieure à 45 % en poids, une teneur en lactose inférieure à 30 % en poids, une teneur en corps gras supérieure à 25 % en poids et une teneur en protéines de plus de 30 % en poids et en ce qu'il a un rapport de la teneur en albumine et en globuline à la teneur en caséine de 2,1 jusqu'à 3,0 à 4,1 jusqu'à 5,0.

**2.** Aliment selon la revendication 1 caractérisé en ce que le lait est constitué exclusivement d'une poudre totalement dessucrée de protéines de lait et/ou de protéines de petit-lait, que l'on utilise en une proportion pouvant aller jusqu'à 60 %, de préférence jusqu'à 55 %.

**3.** Aliment selon la revendication 1 caractérisé en ce qu'il a une teneur en poudre de lait maigre comprise

7

entre 30 et 41 % en poids.

4. Aliment selon la revendication 3 caractérisé en ce qu'il contient, en plus de poudre de lait maigre, des protéines de lait en une proportion de 15 à 55 % en poids, de préférence de 20 à 45 % en poids.

5. Aliment selon l'une quelconque des revendications précédentes, caractérisé en ce que les protéines de lait sont des protéines de petit-lait qui ont été isolées par ultrafiltration ainsi que des caséines.

6. Aliment selon la revendication 5 caractérisé en que la teneur en les protéines de petit-lait ajoutées est comprise entre 10 et 40 %, de préférence entre 15 et 25 %.

7. Aliment selon la revendication 6 caractérisé en ce que les protéines de petit-lait sont des protéines solubles non dénaturées qui sont constituées :
de beta-lactoglobuline,
d'alpha-lactalbumine,
de sérumalbumine,
d'immunoglobulines et
d'une fraction de protéase-peptones.

8. Aliment selon la revendication 5 caractérisé en ce que la teneur en caséines est comprise entre 5 et 30 % en poids, de préférence entre 10 et 15 % en poids.

9. Aliment selon la revendication 8 caractérisé en ce qu'on utilise, comme caséines, des caséines sodiques, potassiques ou calciques ou des caséines acides.

10. Aliment selon l'une quelconque des revendications précédentes, caractérisé en ce qu'il contient des amino-acides purs pour compenser des fluctuations pouvant survenir dans la composante des protéines brutes.

11. Aliment selon la revendication 10 caractérisé en ce qu'il contient, comme amino-acides purs, de la méthionine, de la lysine et de la cystine en des quantités d'au plus 2 % pour chacune d'elles.

12. Aliment selon la revendication 11 caractérisé en ce que le rapport de la lysine à la méthionine est compris entre environ 3,1 % : 1,65 % par rapport à la masse sèche.

13. Aliment selon l'une quelconque des revendications précédentes, caractérisé en ce que la teneur en corps gras bruts est comprise entre 25,5 et 40 % en poids.

14. Aliment selon l'une quelconque des revendications précédentes, caractérisé en ce qu'il contient en outre des souches de bactéries, de préférence des bacilles lactiques ou des streptocoques.

15. Aliment selon l'une quelconque des revendications précédentes, caractérisé en ce qu'il contient en outre des pectines ou du tanin en une quantité comprise entre 0,001 et 1,5 % en poids.